**Europäisches Patentamt**

**European Patent Office**

**Office européen des brevets**

(19)

(11) Veröffentlichungsnummer: **0 209 614**
**B1**

(12) **EUROPÄISCHE PATENTSCHRIFT**

(45) Veröffentlichungstag der Patentschrift:
27.04.88

(51) Int. Cl.⁴: **B 65 G 1/04**

(21) Anmeldenummer: **85109243.7**

(22) Anmeldetag: **23.07.85**

(54) **Rechnergesteuertes Kommissionierlager.**

(43) Veröffentlichungstag der Anmeldung:
**28.01.87 Patentblatt 87/5**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**EP-A-0 048 832**
**DE-A-2 050 686**
**GB-A-2 118 156**
**US-A-3 554 391**

(73) Patentinhaber: **Christ, Ferdinand, Lindenstrasse 9,**
**D-6761 Weitersweiler (DE)**

(72) Erfinder: **Christ, Ferdinand, Lindenstrasse 9, D-6761**
**Weitersweiler (DE)**

(74) Vertreter: **Gudel, Diether, Dr., Patentanwälte Dr.**
**V. Schmied- Kowarzik Dipl.- Ing. G. Dannenberg**
**Dr. P. Weinhold Dr. D. Gudel Dipl.- Ing. S.**
**Schubert Dr. P. Barz Grosse Eschenheimer**
**Strasse 39, D-6000 Frankfurt am Main 1 (DE)**

**Beschreibung**

Die Erfindung betrifft ein Kommissionierlager mit in Zeilen und Spalten angeordneten Gefachen für die zu kommissionierenden Waren, die an einer Seite den Gefachen zugeführt und an der gegenüber liegenden Seite den Gefachen kommissioniert entnommen werden, bei welchen die Gefache hohlzylindrisch angeordnet sind mit der Eingabeseite im Inneren des Hohlzylinders und der Ausgabeseite an dessen Außenwand, bei welchem am Fuß des Hohlzylinders ein Kreisförderzeug für Kommissionierbehälter vorgesehen ist und bei welchem wenigstens ein Übergabeförderer für die Waren von den Gefachen zu den Kommissionierbehältern vorgesehen ist und die Kommissionierung rechnergesteuert erfolgt.

Ein derartiges Kommissionierlager beschreibt die US-PS-3 554 391. Die in dem Hohlzylinder gelagerten Waren werden dort von Hand aus den Gefachen entnommen und in die Kommisisonierbehälter auftragsgebunden eingegeben. Die auftragsgebunden befüllten Kommissionierbehälter werden dann über eine Rollenbahn zu dem Kreisförderer transportiert, der ebenfalls als Rollenbahn ausgebildet ist.

Rechnergesteuerte Förderer eines Kommissionierlagers sind durch die DE-OS-3 038 293 bekannt. Die Waren sind dort in gerade ausgebildeten Hochregallagern gelagert.

Ausgehend von einem Kommissionierlager der eingangs genannten Art liegt der Erfindung die Aufgabe zugrunde, dieses so auszugestalten, daß es sich insbesondere durch fühlbar verringerte Zugriffszeiten auszeichnet, auch bei einer sehr großen Anzahl von zu kommisisonierenden Waren, sowohl im Kommisionierlager wie auch ggfs. in der zu kommissionierenden Warensendung.

Zur Lösung dieser Aufgabe ist die Erfindung dadurch gekennzeichnet, daß der Übergabeförderer an der Außenwand des Hohlzylinders ständig mit der Geschwindigkeit des angetriebenen Kreisförderzeugs umläuft. Die Gefache sind vorzugsweise mit rechnergesteuert betätigbaren Auswerfvorrichtungen versehen.

Es entfällt somit die zeit- und personalaufwendige Übergabe der Waren von Hand, wobei auch Irrtümer auftreten können. Vielmehr werden die Waren rechnergesteuert den Gefachen entnommen, an den Übergabeförderer übergeben und gelangen von dort direkt in den dieser Kommission zugeordneten Kommissionierbehälter.

Es wird bevorzugt, wenn der Übergabeförderer als Rutsche ausgebildet ist, d. h. der Transport im Übergabeförderer mittels Schwerkraft erfolgt.

Die Erfindung wird im folgenden anhand eines Ausführungsbeispieles näher erläutert. Es zeigt:

Fig. 1 - perspektivisch einen Hohlzylinder in seinen wesentlichen Merkmalen;

Fig. 2 - perspektivisch einen der Artikelbehälter dieses Hohlzylinders mit Auswerfvorrichtung für die Waren.

Vollautomatische Kommissionieranlagen zeichnen sich dadurch aus, daß die von den verschiedenen Firmen gelieferten Waren 2 zwar entsprechend dem Bedarf, jedoch in wahlloser Reihenfolge einer Eingabestation zuführbar sind und trotzdem auftragsgemäß nach Arten und Menge zusammengefaßt und einer Ausgabestation schnell und fehlerfrei zum Versand bereitgestellt werden.

Das Fördern und Einlagern dieser Waren sowie das Bereitstellen und schließlich das Ausgeben dieser Waren muß vollautomatisch durchgeführt werden. Eine wesentliche Voraussetzung für die Funktion des Kommissionierlagers besteht darin, daß es entsprechend dem Bedarf mit den erforderlichen Waren aufgefüllt ist. Deshalb erscheint es sinnvoll, die Art und Menge der angelieferten Waren an einem Wareneingang von einer Person zu prüfen und über einen Bildschirm vor Ort die noch benötigten Daten zu ermitteln und abzuspeichern. (z. B. Volumen, Gewicht, Stückzahl). Die Waren gelangen dann vereinzelt über Waagen (wegen Artikelidentifizierung, Stückzahlfeststellung) zielgesteuert weiter in das Kommissionierlager.

Der Rest der Ware wird später zielgesteuert zu einem Übervorratslager gebracht.

Die Vereinzelung der Artikel vor der Waage kann durch das Personal am Wareneingang vorgenommen werden.

Die Anzeige der Stückzahl erfolgt über den Bildschirm, der anzeigt, wieviele der Waren im Kommissionierlager noch Platz haben.

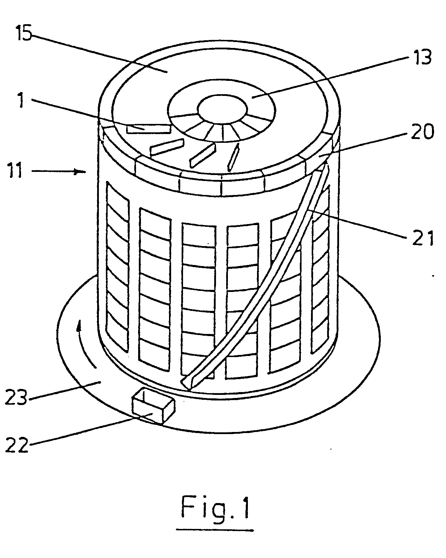

Durch Wegeverfolgung und Codelesung auf der Verpackung der betreffenden Ware gelangt diese schließlich in kreisförmige Förderringe 15 auf der Oberseite von Hohlzylindern 11, (Fig. 1) die Lagertürme darstellen. Auf diesen laufen sie um, bis sie eine bestimmte Stelle des Förderringumfanges erreichen. Dort werden die einzelnen Waren aufgrund ihrer Gewichtsidentifizierung von absenkbaren Leitschaufeln 1 von den Förderringen 15 in radialer Richtung zu Einlagerungsmechanismen von Eingabeschächten 13 gelenkt.

Diese können die Waren nach dem Prinzip eines Paternosters oder eines diskontinuierlich arbeitenden Weitergabesystems abwärts fördern, bis die Waren 2 ihnen zugehörige Artikelbehälter erreichen. Die Übergabe der identifizierten Artikel vom Einlagerungsmechanismus in die Artikelbehälter kann durch aus Düsen austretende Preßluftimpulse erfolgen, ebenso durch Ketten und Schieber.

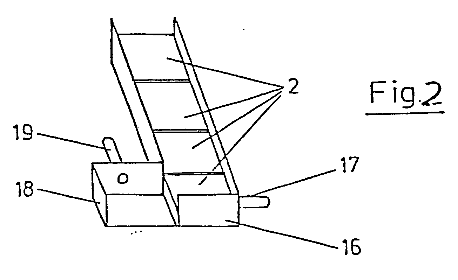

In den Artikelbehältern sollen die Waren 2 zur Vereinfachung der Bereithaltung, der Aussonderung und der Weitergabe geordnet lagern. Zur Bereithaltung empfiehlt sich wiederum das prinzip des Hangabtriebes. Dazu erhalten alle Artikelbehälter eine bestimmte Neigung zur Außenseite des Hohlzylinders 11. Das Herausfallen der Artikel wird am unteren Ende der Artikelbehälter durch eine feste Rahmenblende 16 (vergl. Fig. 2) verhindert.

Zur Absonderung einer abgerufenen Ware aus der Artikelreihe im Behälter wird die unterste Ware mit einem aus einer Düse 17 austretenden Preßluftstrom nach der Seite geschossen, wo er wieder gegen eine Blende 18 stößt und von diesem Bereitstellungsplatz durch einen zweiten radial nach außen gerichteten Preßluftstrom aus einer Düse 19 aus dem Artikelbehälter weitergegeben wird.

Da in den Artikelbehältern befindliche Warenreihen nach der Aussonderung der untersten Ware unter der Wirkung der Schwerkraft sofort nachrücken, können mehrere Waren in rascher Folge aus den Artikelbehältern ausgeworfen werden.

Dies läßt sich auch erreichen durch Räder oder kleine Kettentriebe, die die Waren schnell auswerfen.

Die ausgeworfenen Waren gelangen dann in Sammelsysteme 20 (Fig 1) die aus mehreren schräg um den Hohlzylinder angeordneten Übergabeförderern 21 bestehen, die als Rutschen ausgebildet sind, und die mit einer vorgeschriebenen Geschwindigkeit um den Hohlzylinder 11 kreisen. Die unteren Enden der Rutschen münden in Kommissionierbehälter 22, die auf einem Kreisförderzeug 23 mit den Rutschen um den Hohlzylinder rotieren.

Während eines Umlaufs um den Hohlzylinder nehmen die Kommissionierbehälter alle für ihren Auftrag erforderlichen, in dem jeweiligen Hohlzylinder enthaltenen Waren auf und verlassen die einzelnen Hohlzylinder über Förderbänder, um ggfs. andere Hohlzylinder anlaufen zu können.

Das gesamte Kommissionierlager ist rechnergesteuert.

Weil der bzw. die Übergabeförderer (Rutsche 21) ständig mit der Geschwindigkeit des Kreisförderzeugs 23 (in Pfeilrichtung) umlaufen, gelangen die auftragsgebundenen, von dem Auswerfersystem nach Fig. 2 ausgeworfenen Waren 2 über die Rutsche 21 in den genau diesem Auftrag zugeordneten Kommissionierbehälter 22. Rechnergesteuert erhalten die Auswerfersysteme der Fig. 2 nämlich erst dann Befehl zum Auswerfen einer bestimmten Anzahl der im betreffenden Schacht vorhandenen Waren, wenn die Rutsche sich direkt unter diesem Schacht befindet.

Die Rutsche erstreckt sich wendelförmig über die gesamte Höhe der Gefache des Hohlzylinders 11, so daß sie alle Gefache bedienen kann. (Die Gefache sind in Fig. 1 durch Rechtecke angedeutet.)

Sind in einem der Kommissionierbehälter 22 alle Waren kommissioniert, die sich in dem betreffenden Hohlzylinder (Turm) befinden und die mit dem betreffenden Auftrag abgesammelt werden sollen, so wird der Kommissionierbehälter über Fördermittel rechnergesteuert ggfs. zu weiteren Hohlzylindern 11 transportiert oder auch zum Warenausgang des Kommissionierlagers.

Die Zu- und Abförderung der Kommissionierbehälter 22 zu den Kreisförderern 23 ist daher ebenfalls rechnergesteuert.

Die Einlagerung der Waren erfolgt über die Innenseite der Hohlzylinder 11, und zwar vorzugsweise über dort vorgesehene, um lotrechte Achsen drehbare und ebenfalls rechnergesteuerte Paternoster mit rechnergesteuerter Übergabe an die betreffenden Gefache. An den Gefachen können Signalgeber vorgesehen sein, die dem Rechner mitteilen, wann das betreffende Gefach wieder gefüllt werden muß.

**Patentansprüche**

1. Kommissionierlager mit in Zeilen und Spalten angeordneten Gefachen für die zu kommissionierenden Waren (2), die an einer Seite den Gefachen zugeführt und an der gegenüber liegenden Seite den Gefachen kommissioniert entnommen werden, bei welchen die Gefache hohlzylindrisch angeordnet sind mit der Eingabeseite im Innern des Hohlzylinders (11) und der Ausgabeseite an dessen Außenwand, bei welchem am Fuß des Hohlzylinders (11) ein Kreisförderzeug (23) für Kommissionierbehälter (22) vorgesehen ist und bei welchem wenigstens ein Übergabeförderer (21) für die Waren (2) von den Gefachen zu den Kommissionierbehältern (22) vorgesehen ist und die Kommissionierung rechnergesteuert erfolgt,
dadurch gekennzeichnet,
daß der Übergabeförderer (21) an der Außenwand des Hohlzylinders (11) ständig mit der Geschwindigkeit des angetriebenen Kreisförderzeugs (23) umläuft.

2. Kommissionierlager nach Anspruch 1,
dadurch gekennzeichnet,
daß die Gefache mit rechnergesteuert betätigbaren Auswerfvorrichtungen (16, 17, 18, 19) versehen sind.

3. Kommissionierlager nach Anspruch 1 oder 2,
dadurch gekennzeichnet,
daß der Übergabeförderer (21) als Rutsche ausgebildet ist.

**Claims**

1. Dispensing store composed of compartments for the goods (2) to be commissioned, arranged in lines and columns, which on one side can be fed to the compartments and on the opposite side can be taken from the compartments already commissioned, where the compartments are arranged in form of hollow cylinders with the input side inside the hollow cylinder (11) and the output side on its outer wall, where at the end of the hollow cylinder (11) a circular conveyor (23) for commissioning containers (22) is provided and where at least one transfer conveyor (21) for the goods (2) is provided from the compartments to the commissioning containers (22) and commissioning takes place computer-controlled.

<u>Wherein</u> the transfer conveyor (21) on the outer wall of the hollow cylinder (11) constantly rotates at the speed of the driven circular conveyor (23).

2. Dispensing store described in claim 1, <u>wherein</u> the compartments are equipped with ejectors (16, 17, 18, 19) which can be operated computer- controlled.

3. Dispensing store described in claims 1 or 2, <u>wherein</u> the transfer conveyor (21) is designed as a chute.

## Revendications

1. Magasin de commission à cases verticales et horizontales destinées à la réception des marchandises à commissionner (2) qui seront alimentées aux cases par un côté et prélevées en portions commissionnées par le côté opposé. L'arrangement des cases est en forme d'un cylindre creux (11), dont la face interieure est le côté d'alimentation et la face extérieure le côté de sortie. Un mécanisme de manutention circulaire (23) pour conteneurs de commission (22) est prévu à la base du cylindre creux. Au moins une bande de transfert (21) sert à transporter les marchandises (2) des cases vers les conteneurs (22). La préparation des marchandises s'effectuera par ordinateur. Le magasin de commission
<u>est caractérisé</u>
par le fait que la bande de transfert (21) tourne sur la face extérieure du cylindre creux (11) avec la même vitesse que celle du mécanisme de manutention circulaire (23).

2. Le magasin de commission selon la demande 1
<u>est caractérisé</u>
par le fait que les cases sont équipées d'un système de jetée commandé par ordinateur (16, 17, 18, 19).

3. Le magasin de commssionn selon la demande 1 ou 2
<u>est caractérisé</u>
par le fait que la bande de transfert (21) est réalisée en forme d'un plan incliné.

## Fig.1

Fig.2